## Europäisches Patentamt
## European Patent Office
## Office européen des brevets

(19)

(11) Veröffentlichungsnummer: **0 256 197**
**B1**

(12)

# EUROPÄISCHE PATENTSCHRIFT

(45) Veröffentlichungstag der Patentschrift:
**25.10.89**

(51) Int. Cl.⁴: **G01L 1/10, G12B 9/00**

(21) Anmeldenummer: **86810369.8**

(22) Anmeldetag: **19.08.86**

(54) **Vorrichtung zum Befestigen einer schwingenden Saite an einem Teil eines Messapparates.**

(43) Veröffentlichungstag der Anmeldung:
**24.02.88 Patentblatt 88/8**

(45) Bekanntmachung des Hinweises auf die Patenterteilung:
**25.10.89 Patentblatt 89/43**

(84) Benannte Vertragsstaaten:
**CH DE FR GB IT LI NL SE**

(56) Entgegenhaltungen:
**EP-A- 0 150 584**
**FR-A- 2 172 481**
**FR-A- 2 370 880**
**GB-A- 1 085 501**
**NL-C- 56 929**
**US-A- 2 604 787**

(73) Patentinhaber: **WIRTH GALLO MESSTECHNIK AG,
Sonnenbergstrasse 55, CH-8032 Zürich(CH)**

(72) Erfinder: **Wirth, Johannes, Sonnenbergstrasse 55,
CH-8032 -Zürich(CH)**

(74) Vertreter: **Salgo, Reinhold Caspar, Usterstrasse 139,
CH-8621 Wetzikon 4(CH)**

**Beschreibung**

Die vorliegende Erfindung bezieht sich auf eine Vorrichtung zum Befestigen einer schwingenden Saite an einem Teil eines Messapparates, z.B. eines Dynamometers.

Messapparate, bei welchem schwingende Saiten als Frequenzgeber verwendet werden sind z.B. aus der Schweizer Patentschrift 447 653 bekannt. Die Schwingungen solcher Saiten sind nicht nur von ihrer Masse, Länge und Spannkraft bestimmt, sondern auch von der Art ihrer Verbindung mit den übrigen Teilen des Messapparates. Ferner soll die Saite mindestens an einem Ende von einer anschliessenden Kraftübertragunskette elektrisch isoliert sein.

Aus der deutschen Patentschrift 2.239.997 ist eine Befestigungsvorrichtung bekannt, die den meisten Ansprüchen an der Verbindung der Saite mit den übrigen Teilen des Messgerätes genügt. Insbesondere bilden die zwei Saitenenden Schwingungsknoten und die Saite ist möglichst verlustfrei mit den Anschlussteilen verbunden, d.h. dass praktisch keine Schwingungsenergie in Reibung verloren geht. Soll die Saite zusätzlich noch elektrisch isoliert sein, so geschieht dies durch eine elektrisch isolierende Schraubverbindung, die die Anschlussteile von den übrigen Teilen des Messapparates elektrisch trennt. Diede Verbindung ist jedoch sehr aufwendig wenn sie absolut zuverlässig ausgeführt werden soll.

Aus der FR-A 2 172 481 ist eine Befestigungsvorrichtung für eine schwingende Saite bekannt, die mittels einer Kombination aus Konus und Ueberwurfmutter zwei Platten zusammendrückt, zwischen denen die Saite eingeklemmt wird. Diese Konstruktion ist für die heute verwendeten Saitenlängen von wenigen Millimetern ungenau und bei der angestrebten Miniaturisierung der Messapparate zu gross bauend.

Zudem werden beim Anziehen der Ueberwurfmutter Torsionskräfte ausgeübt, die im Montagebetrieb nicht mit Sicherheit kompensiert werden können. Es besteht daher die Gefahr von Beschädigung der empfindlichen Messapparate und Kraftübertragungsketten.

In der NL-C 56 929 ist eine Vorrichtung vorgeschlagen zum Befestigen von schwingenden Zungen. Diese vermag für die grundsätzlich vorliegende Aufgabe – nämlich das Befestigen einer schwingenden Saite – nicht zu genügen, da einerseits die Längendefinition nicht den heutigen Genauigkeitsanforderungen genügt, andereseits die dort vorgeschlagene Befestigungsart nicht für die sichere Aufnahme von Zugkräften geeignet ist, Zugkräften, wie sie von schwingenden Saiten konstruktions- und zweckgemäss ausgeübt werden.

Die der Erfindung zu Grunde liegende Aufgabe besteht darin, eine zuverlässige elektrische Isolierung der Saite von den übrigen Teilen des Messapparates zu schaffen, die eine wirtschaftliche Ausführung erlaubt, ohne jedoch die Vorteile der bekannten Befestigungsart preiszugeben. Diese sind, u.a. die Bildung eines Schwingungsknotens am Befestigungspunkt, die Möglichkeit für die Befestigungsvorrichtung die Funktion eines Sperrfilters zwischen Saite und Kraftübertragungskette zu bilden und die Vermeidung von mechanischen Reibungsverlusten.

Dies wird gemäss Anspruch verwirklicht.

In der beiliegenden Zeichnung sind Ausführungsbeispiele des Erfindungsgegenstandes schematisch dargestellt.

Es zeigen:

Fig. 1 ein erstes Ausführungsbeispiel,
Fig. 2 eine Variante zu Fig. 1,
Fig. 3 bis 6 je ein Ausführungsbeispiel.

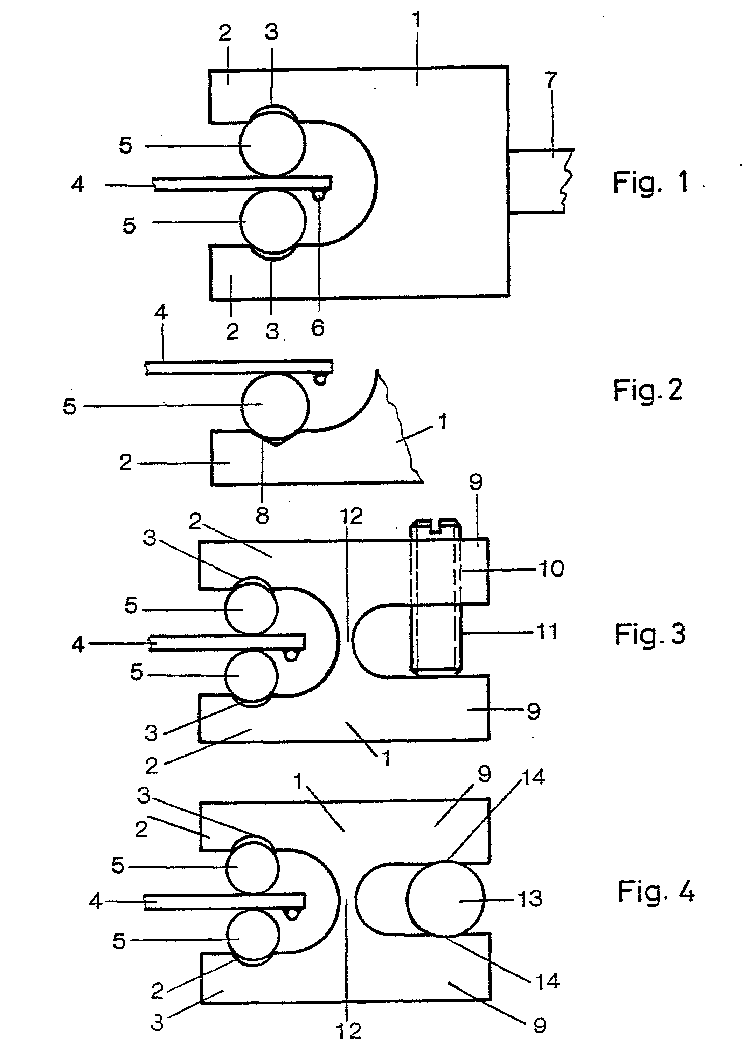

Im Ausführungsbeispiel der Fig. 1 besteht die Befestigungsvorrichtung aus einem massiven, U-förmigen Körper 1, dessen Schenkel je eine Backe 2 bilden und auf ihrer Innenseite je eine Nut 3 kreisbogenförmigen Querschnittes aufweisen. Die Saite 4 ist zwischen zwei zylindrische Saphire 5 geklemmt. Der Durchmesser der Saphire 5 ist grösser als derjenige der Nuten 3. An ihrem Ende ist die Saite 4 über einen Anschluss 6 in nicht dargestellter Weise mit dem elektrischen Teil des Messapparates elektrisch derart verbunden, dass keine Kräfte auf die Saite 4 übertragen werden.

Die verschiedenen Teile sind so bemessen, dass durch die seitliche Einschiebung der Saphire 5 und der Saite 4 die Backen 2 des Körpers 1 elastisch verformt werden und somit eine permanente elastische Klemmkraft ausüben, die die Saphire 5 und die Saite 4 zusammenhält und über die ganze Breite der Saite 4 gegeneinander kraftschlüssig presst. Der Kontakt zwischen den Saphiren 5 und den Nuten 3 erfolgt entlang je zwei Erzeugenden der Saphire 5. Die Enden der Saite 4 haben in bekannter Weise einen rechteckigen Querschnitt, sodass der Kontakt zwischen ihr und den Saphiren 5 ebenfalls entlang einer Erzeugenden erfolgt. In der Praxis jedoch, wegen der verhältnismässig hohen Anpresskraft, erfolgt entlang dieser Erzeugenden eine plastische Verformung der Enden der Saite 4, sodass der Kontakt mit den Saphiren 5 über einen schmalen, geraden Bereich erfolgt. Der Körper 1 und seine Backen 2 müssen derart bemessen werden, dass die von den Backen 2 geübte Anpresskraft entlang der Erzeugenden der Saphire 5 homogen ist. Ferner muss die Oberflächenbeschaffenheit der Saphire 5 und der Saite 4 derart gewählt werden, dass der erwähnte Kontaktstreifen schmal genug, und dass die Anpresskraft entlang dieses Kontaktstreifens ebenfalls homogen, bleibt. Sind diese Bedingungen erfüllt, so geht praktisch keine Schwingungsenergie in Reibung verloren.

In Fig. 1 ist das erste Element 7 der Kraftübertragungskette des Messapparates schematisch dargestellt. Die auf die Saite 4 wirkende Messkraft wird über diese Kraftübertragungskette auf die Saite 4 übertragen. Je nach Gestaltung des Messapparates kann z.B. der Körper 1 mit einer Feder als erstes Element 7 der Kraftübertragungskette verbunden sein und somit einen mechanischen Sperrbandfilter bilden, um die Saite 4 von ihrer Umgebung im Saitenfrequenzbereich mechanisch zu isolieren.

An Stelle von zylindrischen Saphiren könnten konische Saphire verwendet werden. Die Nuten 3 müssen in diesem Falle entsprechend dem Kegelwinkel der Saphire verlaufen, damit der Kontakt entlang der Erzeugenden verwirklicht wird. Andere elektrisch isolierende Materiale als Saphire, z.B. Körper aus Keramik, können auch verwendet werden.

In Fig. 2 ist eine Variante der Ausführung der Nuten der Backen 2 dargestellt. Die Nuten 8 haben statt eines kreisbogenförmigen Querschnittes einen dreieckigen Querschnitt. Die Saphire 5 sind entlang einer Erzeugenden mit jeder der Flanken der Nuten 8 im Kontakt.

Die Einsetzung des Satzes Saite/Saphire zwischen die Backen 2 kann entweder entgegen der Klemmkraft der beiden Backen oder, bei passend bemessenen Backen 2, kraftlos erfolgen. Fig. 3 zeigt ein Ausführungsbeispiel, bei welchem der Satz Saite/Saphire ohne Kraftanwendung eingeführt werden kann. Um jedoch über die notwendige Klemmkraft verfügen zu können, weisen die Backen 2 je eine Verlängerung 9 auf. Die obere Backe 2 weist eine Gewindebohrung 10 und eine Schraube 11 auf, deren Ende mit der Innenseite der unteren Backe 2 im Kontakt steht. Der Teil 12 des Körpers 1 ist genügend biegeweich ausgeführt, sodass das Anziehen der Schraube 11 die notwendige elastische Verformung der Verlängerungen 9, des Teiles 12 und der Backen 2 verursacht, damit die gewünschte Klemmkraft entsteht.

In Fig. 4 ist ein Ausführungsbeispiel dargestellt, bei welchem die Schraube 11 der Fig. 3 durch eine Kugel 13 ersetzt wird. Diese Kugel 13 wird zwischen die Verlängerungen 9 eingeschoben und zwar bis sie in den von zwei Aussparungen 14 gebildeten Sitz gelangt. Ihre Wirkung ist dieselbe wie die der Schraube 11, wobei, bei gegebener Elastizität der übrigen Teile, die Grösse der Klemmkraft vom Durchmesser der Kugel 13 abhängt.

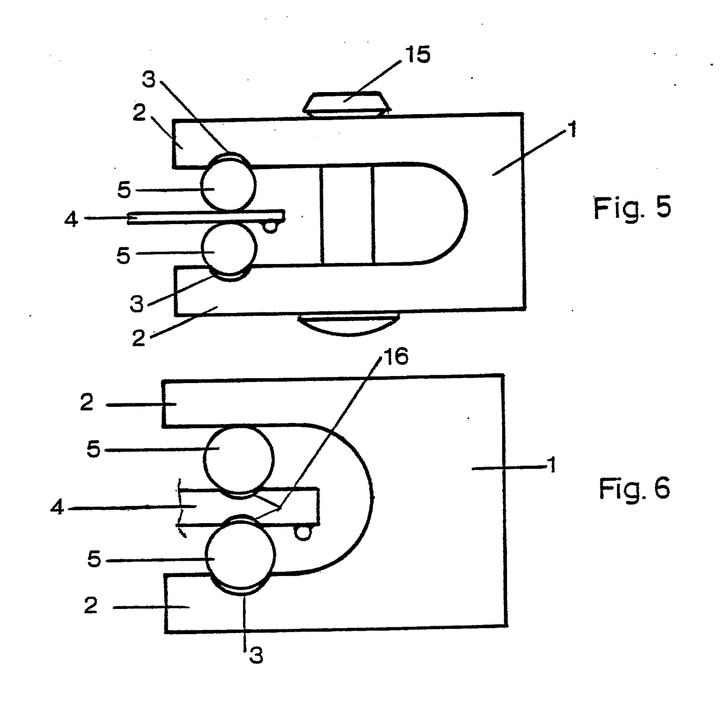

Fig. 5 zeigt ein drittes Ausführungsbeispiel, bei welchem die gleiche Wirkung durch Einsetzen einer Niete 15 erzielt wird, die die beiden Backen 2 mit der gewünschten Spannung verbindet. An Stelle einer Niete könnte eine Schraube mit Mutter verwendet werden.

In Fig. 6 ist ein Ausführungsbeispiel dargestellt, bei welchem nur die untere Backe 2 eine Nut 3 aufweist. Diese Ausführung kommt zur Anwendung wenn die Saite 4 oder ihr Ende dick genug sind, damit sie zwei Quernuten 16 aufweisen können. Der untere Saphir 5 steht somit sowohl mit der Nut 3 der unteren Backe 2 als auch mit der unteren Quernut 16 des Saitenendes je entlang zweier Erzeugenden im Kontakt. Der obere Saphir 5 steht mit der oberen Quernut 16 entlang zweier Erzeugenden und mit der oberen Backe 2 entlang einer einzigen Erzeugenden im Kontakt. Die Klemmkraft wird derart bemessen, dass auch bei Belastung der Saite 4 der obere Saphir 5 nicht ausrutscht.

## Patentansprüche

1. Vorrichtung zum Befestigen einer schwingenden Saite (4) mit rechteckigem Querschnitt an einem Teil eines Messapparates, dadurch gekennzeichnet, dass
   – sie einen U-förmigen Körper (1) mit zwei Backen (2) und zwei Haltekörper (5) aus elektrisch isolierendem Material aufweist
   – mindestens eine der Backen (2) auf der der Saite (4) zugewendeten Seite eine Nut (3) aufweist, die quer zur Saitenachse verläuft,
   – die Haltekörper (5) einerseits entlang zweier Erzeugenden der Haltekörper (5) in der Nut (3) mit den Backen (2) in Kontakt stehen und anderseits durch die Klemmwirkung der beiden Backen (2) die Saite (4) quer über ihre ganze Breite kraftschlüssig und elektrisch isoliert festklemmen.

2. Vorrichtung nach Patentanspruch 1, dadurch gekennzeichnet, dass die Haltekörper (5) zylindrisch sind.

3. Vorrichtung nach Patentanspruch 1, dadurch gekennzeichnet, dass die Haltekörper (5) konisch sind.

4. Vorrichtung nach Patentanspruch 2, dadurch gekennzeichnet, dass die Nut (3) einen kreisbogenförmigen Querschnitt aufweist, dessen Radius kleiner ist, als der Radius des zylindrischen Haltekörpers (5).

5. Vorrichtung nach Patentanspruch 3, dadurch gekennzeichnet, dass die Nut (3) einen kreisbogenförmigen Querschnitt aufweist, dessen Radius kleiner ist, als der kleinere Radius des konischen Haltekörpers (5).

6. Vorrichtung nach Patentanspruch 1, dadurch gekennzeichnet, dass der Körper (1) und die Backen (2) so dimensioniert sind, dass die elastischen Kräfte die nötige Klemmkraft für die Befestigung der Saite (4) aufbringen.

7. Vorrichtung nach Patentanspruch 1, dadurch gekennzeichnet, dass die Backen (2) je eine Verlängerung (9) aufweisen zur Aufnahme eines Körpers (11, 13), so dass die Klemmkraft der Backen (2) durch elastische Verformung des Körpers (1) infolge der Einführung des zweiten Körpers (11, 13) zwischen die Verlängerungen (9) entsteht.

8. Vorrichtung nach Patentanspruch 7, dadurch gekennzeichnet, dass der genannte Körper eine Schraube (11) ist, die durch eine Gewindebohrung (10) in der einen Verlängerung (9) hindurchgeht und auf die Innenseite der anderen Verlängerung (9) drückt.

9. Vorrichtung nach Patentanspruch 7, dadurch gekennzeichnet, dass der genannte Körper eine Kugel (13) ist, die in einen durch zwei Aussparungen (14) in den Verlängerungen (9) gebildeten Sitz eingeschoben werden kann.

10. Vorrichtung nach Patentanspruch 1, dadurch gekennzeichnet, dass die beiden Backen (2) durch eine Niete (15) zusammengedrückt werden, wodurch die notwendige Klemmkraft auf die Saite (4) entsteht.

**Revendications**

1. Dispositif de fixation d'une corde vibrante (4), de section rectangulaire, à une partie d'un appareil de mesure, caractérisé,
   – en ce qu'il présente un corps (1) en forme de U avec deux mors (2) et deux corps de retenue (5) en matériau électriquement isolant,
   – en ce qu'au moins l'un des mors (2) présente, sur sa face tournée vers la corde (4), une rainure (3) dirigée transversalement à l'axe de la corde,
   – en ce que les corps de retenue (5) d'une part sont en contact, dans la rainure (3), avec les mors (2), le long de deux génératrices des corps de retenue (5) et, d'autre part, par l'action de bridage des deux mors (2), bloquent, de par la force et avec isolement électrique, la corde (4) transversalement sur toute sa largeur.

2. Dispositif selon la revendication 1, caractérisé en ce que les corps de retenue (5) sont cylindriques.

3. Dispositif selon la revendication 1, caractérisé en ce que les corps de retenue (5) sont coniques.

4. Dispositif selon la revendication 2, caractérisé en ce que la rainure (3) présente une section en arc de cercle dont le rayon est inférieur au rayon du corps de retenue cylindrique (5).

5. Dispositif selon la revendication 3, caractérisé en ce que la rainure (3) présente une section en arc de cercle dont le rayon est inférieur au plus petit rayon du corps de retenue conique (5).

6. Dispositif selon la revendication 1, caractérisé en ce que le corps (1) et les mors (2) sont dimensionnés de façon que les forces élastiques exercent la force de bridage nécessaire pour la fixation de la corde (4).

7. Dispositif selon la revendication 1, caractérisé en ce que les mors (2) présentent chacun un prolongement (9) pour recevoir un corps (11, 13), de façon telle que la force de bridage des mors (2) apparaisse par déformation élastique du corps (1) par suite de l'introduction du second corps (11, 13) entre les prolongements (9).

8. Dispositif selon la revendication 7, caractérisé en ce que le corps mentionné est une vis (11) qui traverse l'un des prolongements (9) par un taraudage (10) et appuie sur la face intérieure de l'autre prolongement (9).

9. Dispositif selon la revendication 7, caractérisé en ce que le corps mentionné est une bille (13) que l'on peut introduire dans un siège formé par deux évidements (14) prévus dans les prolongements (9).

10. Dispositif selon la revendication 1, caractérisé en ce que les deux mors (2) sont comprimés par un rivet (15) de façon que la force de bridage nécessaire apparaisse sur la corde (4).

**Claims**

1. A device for fixing a vibrating string (4) having a rectangular cross-section to part of a measuring instrument, characterised in that:
   – the device comprises a U-shaped member (1) having two jaws (2) and two retaining members (5) made of electrically insulating material
   – at least one of the jaws (2) is formed on the side facing the string (4) with a groove 3 extending transversely to the groove axis, and
   – the retaining members (5) are on the one hand in contact with the jaws (2) in the groove (3) along two generatices of the retaining members (5) and on the other hand firmly clamp the string (4) transversely across its entire width, non-positively and with electric insulation, owing to the clamping effect of the two jaws (2).

2. A device according to claim 1, characterised in that the retaining members (5) are cylindrical.

3. A device according to claim 1, characterised in that the retaining members (5) are conical.

4. A device according to claim 2, characterised in that the groove (3) has an arcuate cross-section, the radius of which is less than the radius of the cylindrical retaining member (5).

5. A device according to claim 3, characterised in that the groove (3) has an arcuate cross-section, the radius of which is less than the minor radius of the conical retaining member (5).

6. A device according to claim 1, characterised in that the member (1) and the jaws (2) are dimensioned so that the elastic forces apply the necessary clamping force for securing the string (4).

7. A device according to claim 1, characterised in that the jaws (2) each have a prolongation (9) for receiving a member (11, 13) so that the clamping force of the jaws (2) is produced by elastic deformation of the member (1) as a result of inserting the second member (11, 13) between the prolongations (9).

8. A device according to claim 7, characterised in that the aforementioned member is a screw (11) which is inserted through a threaded bore (10) into one prolongation (9) and presses against the inside of the other prolongation (9).

9. A device according to claim 7, characterised in that the aforementioned member is a ball (13) which can be inserted into a seat formed by two recesses (14) in the prolongations (9).

10. A device according to claim 1, characterised in that the two jaws (2) are compressed by a rivet (15), thus producing the necessary clamping force on the string (4).

Fig. 1

Fig. 2

Fig. 3

Fig. 4

Fig. 5

Fig. 6